# FASCICULE DE BREVET EUROPEEN

(11) **EP 1 546 276 B1**
(45) Date de publication et mention de la délivrance du brevet: **21.06.2006**
(21) Numéro de dépôt: 03749923.3
(22) Date de dépôt: 06.05.2003
(51) Int. Cl.: C09J 7/02, B65H 35/00, B65H 37/00, B29C 69/00, B29C 63/00, B60J 10/02

(54) **PROCEDE AUTOMATISE DE POSE ET DE CONFECTION DE LANGUETTES DE PREHENSION ET PELLICULE DE PROTECTION AINSI QUE PROFILE EXTRUDE COMPORTANT UNE PELLICULE DE PROTECTION COMPORTANT DES LANGUETTES DE CE TYPE**
AUTOMATISIERTES VERFAHREN ZUR VORBEREITUNG UND HERSTELLUNG VON ANFASSERN UND EINER SCHUTZFOLIE SOWIE EXTRUSIONSPROFIL MIT SCHUTZFOLIE MIT DERARTIGEN ANFASSERN
AUTOMATED METHOD OF PREPARING AND PRODUCING PULL TABS AND A PROTECTIVE FILM AND AN EXTRUDED SECTION HAVING A PROTECTIVE FILM COMPRISING PULL TABS OF SAID TYPE

(30) Priorité: 07.05.2002 FR 0205734
(43) Date de publication de la demande: 29.06.2005
(73) Titulaire: Rehau SA, 57340 Morhange (FR)
(72) Inventeur: PENNERATH, Eddy, F-57450 Henriville (FR)
(74) Mandataire: Metz, Paul
(86) Numéro de dépôt international: PCT/FR2003/001398
(87) Numéro de publication internationale: WO 2003/095577

(56) Documents cités:
- WO-A-01/14489
- FR-A- 2 679 845
- FR-A- 2 813 873
- US-A- 2 474 013

## Description

La présente invention concerne un procédé automatisé de pose et de confection de languettes de préhension, servant à faciliter la prise de l'extrémité et le décollement ultérieur d'une pellicule protégeant une bande d'adhésif s'étendant sur un profilé extrudé destiné par exemple à être assemblé par la suite avec formation d'angle, par soudage, surmoulage ou autre.

Elle concerne également un profilé extrudé, comportant une bande d'adhésif recouverte d'une pellicule de protection munie, pour faciliter son décollement, d'au moins une languette de préhension susceptible d'être posée conformément au procédé automatisé selon l'invention.

Plus généralement, elle concerne tout élément, linéaire ou non, à solidariser sur une surface par l'intermédiaire d'une bande d'adhésif sur lequel s'étend une pellicule de protection, qui doit être enlevée avant collage au moyen d'une languette de préhension.

Cette invention est particulièrement adaptée aux cadres profilés destinés à habiller le pourtour d'une vitre fixe, telle que par exemple un pare-brise, une lunette ou une custode, d'un véhicule automobile ou autre. Elle peut également s'appliquer aux profilés collés d'étanchéité, de protection ou d'esthétique pour vitres, panneaux, rebords de carrosserie, chants métalliques ou autres dans le domaine automobile, celui des transports, du bâtiment ou tout autre domaine.

Certains profilés d'habillage et/ou d'étanchéité pour vitres fixes, également appelés enjoliveurs de pare-brise, de lunette ou autre, sont solidarisés à la périphérie du vitrage au moyen d'un adhésif double face, se présentant le plus souvent sous la forme d'une bande.

Ces profilés sont généralement réalisés en continu par extrusion. La bande d'adhésif double face est alors être appliquée automatiquement en ligne d'extrusion sur le profilé, une face adhésive de celle-ci adhérant sur la surface à rapporter du profilé.

Afin de protéger l'adhésif jusqu'au moment du montage par collage du profilé, par exemple en périphérie d'une vitre fixe, l'autre face de la bande adhésive est classiquement recouverte d'une pellicule de protection. L'adhésif double face étant généralement livré avec la pellicule de protection déjà solidarisée sur l'une de ses faces, cette pellicule de protection se trouve sur la bande au moment de l'application de celle-ci sur le profilé. Elle est donc mise en place sur le profilé automatiquement en ligne d'extrusion, simultanément à la bande adhésive.

Ces profilés sont ensuite coupés à longueur, puis livrés en tronçons ou le plus souvent d'abord confectionnés en cadre selon les particularités de la commande .

Les cadres sont formés par assemblage de plusieurs tronçons de profilé de longueurs identiques ou différentes, réunis par des raccords d'angle de jonction, par exemple par soudage ou par surmoulage. Le nombre et la longueur des tronçons de profilé, les angles de jonction, ainsi que la forme générale du cadre obtenu sont choisis de manière appropriée en fonction de l'application à laquelle le cadre est destiné.

Le plus souvent, ces cadres sont constitués de trois tronçons de profilé, deux latéraux et un supérieur, ou de quatre tronçons de profilé, deux latéraux, un supérieur et un inférieur, reliés au niveau de leurs extrémités lors d'une opération de soudage ou de surmoulage.

Pour faciliter l'enlèvement de la pellicule de protection préalablement au montage du cadre, il est d'usage de coller ou de souder des languettes de préhension sur la pellicule protectrice recouvrant l'adhésif. De cette façon, l'utilisateur peut aisément saisir l'extrémité libre de ces languettes et opérer une traction perpendiculaire à la surface de collage pour désolidariser la pellicule de la surface adhésive.

Afin d'être efficace, une telle languette doit être positionnée sensiblement au niveau de l'extrémité de la pellicule de protection. En effet, la tenue de la pellicule sur la bande adhésive est souvent si importante qu'il est nécessaire d'exercer un effort de pelage perpendiculaire et appliqué à partir de l'extrémité de la pellicule à décoller. Une languette déposée en pleine zone adhésive ne permet pas d'arracher aisément et convenablement la pellicule de protection.

Actuellement, le collage des languettes de préhension est une opération réalisée manuellement, qui n'a pas encore pu être automatisée.

En effet, les languettes devant être placées en extrémité de l'adhésif, la pose de ces languettes doit être réalisée après l'étape de soudage ou de surmoulage correspondant à la formation des angles, car la présence de languettes au niveau de la zone de jonction gêneraient cette opération. Or, une étape de mise en place automatique des languettes, postérieure à l'étape de soudage ou de surmoulage, nécessiterait une manipulation des cadres complets, qui est difficile à réaliser de manière automatisée.

D'autre part, si l'on veut placer les languettes pendant l'extrusion, ce qui serait techniquement beaucoup plus facile à réaliser de manière automatique, il faut les positionner en pleine zone adhésive, pour ne pas gêner les opérations suivantes d'assemblage. Or, comme il a déjà été signalé précédemment, l'arrachage ultérieur de la pellicule de protection devient alors très difficile.

Le but de l'invention est de proposer un procédé de pose et de confection de languettes de préhension, permettant par la suite un arrachage facile et rapide de la pellicule de protection de l'adhésif, qui peut être facilement automatisé et qui ne pose pas de problème pour les étapes ultérieures de transformation du profilé.

Pour résoudre ce problème technique, l'invention enseigne un procédé automatisé de pose et de confection de languettes de préhension, servant à faciliter l'arrachage ultérieur d'une pellicule de protection recouvrant la face libre d'une bande d'adhésif double face s'étendant sur un profilé extrudé en continu, les languettes comportant une partie de rattachement à la pellicule de protection et une extrémité libre.

Le procédé comprend les étapes suivantes :
- solidarisation d'une languette de préhension à la pellicule de protection, en pleine zone adhésive et transversalement au profilé de manière que son extrémité libre dépasse latéralement par rapport à l'adhésif ;
- découpe de la languette et de la pellicule de protection de façon à individualiser au même endroit la languette de préhension et la pellicule de protection pour obtenir deux fractions de languette, solidarisées chacune à l'extrémité d'une longueur de pellicule de protection destinée à être arrachée.

La languette est, de préférence, collée ou soudée à la pellicule de protection recouvrant l'adhésif.

La découpe de la languette et de la pellicule de protection s'effectue de préférence sensiblement au niveau du milieu de la languette. On dispose alors de deux demi-languettes, solidarisées chacune à l'extrémité d'une longueur de pellicule de protection destinée à être arrachée.

Les étapes de solidarisation et de découpe ont lieu en ligne d'extrusion, avant d'éventuelles étapes d'assemblage du profilé par surmoulage, soudage ou autre. Elles sont particulièrement simples et peuvent être réalisées en continu, l'homme du métier pouvant facilement concevoir leur automatisation au moyen de dispositifs disponibles dans l'industrie.

Les languettes, étant déposées en pleine zone adhésive et non à l'extrémité de celle-ci, ne sont pas gênantes pour les opérations ultérieures d'assemblage, par exemple par soudage ou surmoulage.

Par ailleurs, ces deux demi-languettes permettent un arrachage rapide et sans effort de la pellicule protectrice, car grâce à la découpe elles se retrouvent à l'extrémité d'une longueur de pellicule. De plus, leur dépassement latéral permet de procéder à l'arrachage de façon satisfaisante.

Le fait de devoir enlever deux longueurs de pellicule n'est pas véritablement un inconvénient, cette opération pouvant même se faire d'un seul geste. Au contraire, il peut même constituer un avantage lors de la pose du profilé, en permettant à l'utilisateur de retirer d'abord une première longueur de pellicule pour positionner le profilé avec précision, par exemple au niveau des angles, sans être gêné par le collage involontaire du reste du profilé car l'adhésif est encore protégé par l'autre longueur de pellicule.

La solution selon l'invention est particulièrement avantageuse, car elle permet de supprimer le coût important de la pose manuelle. L'économie est substantielle étant donné que chaque tronçon d'un cadre comporte une, voire deux languettes de préhension.

L'invention enseigne également une pellicule de protection d'une bande adhésive double face qui se caractérise en ce qu'elle comprend au moins une languette de préhension solidarisée à la pellicule de protection, en pleine zone adhésive et transversalement à la pellicule et en ce que cette languette est une languette double, composée de deux fractions de languette juxtaposées de part et d'autre d'une découpe de la pellicule de protection individualisant celle-ci en deux longueurs de pellicule de protection, chacune de ces fractions de languette étant solidarisée sensiblement à l'extrémité de l'une de ces longueurs.

La présente demande décrit aussi un profilé et un cadre, munis d'une pellicule de protection de ce type.

D'autres caractéristiques et avantages de l'invention apparaîtront à la lecture de la description détaillée qui va suivre, description faite en référence aux dessins annexés, dans lesquels :
- la figure 1 est une vue schématique de l'arrière d'un cadre selon l'art antérieur, destiné à être collé au moyen d'un adhésif double face ;
- la figure 2 est une vue schématique de l'arrière d'un cadre, selon l'invention ;
- la figure 3 est un agrandissement d'une partie du cadre représenté sur la figure 2, correspondant à la zone de collage d'une languette double selon l'invention ;
- la figure 4 est une vue en coupe longitudinale, selon la ligne IV-IV, de la portion de profilé représentée sur la figure 3 ;
- la figure 5 est une vue en perspective de l'arrière d'un tronçon de profilé selon l'invention, la languette de préhension étant partiellement décollée ;
- la figure 6 est une vue schématique en coupe transversale d'un exemple d'application d'un profilé selon l'invention à une vitre fixe d'automobile ;
- la figure 7 est un schéma d'un exemple de ligne automatisée de fabrication de profilés, mettant en εuvre le procédé selon l'invention.

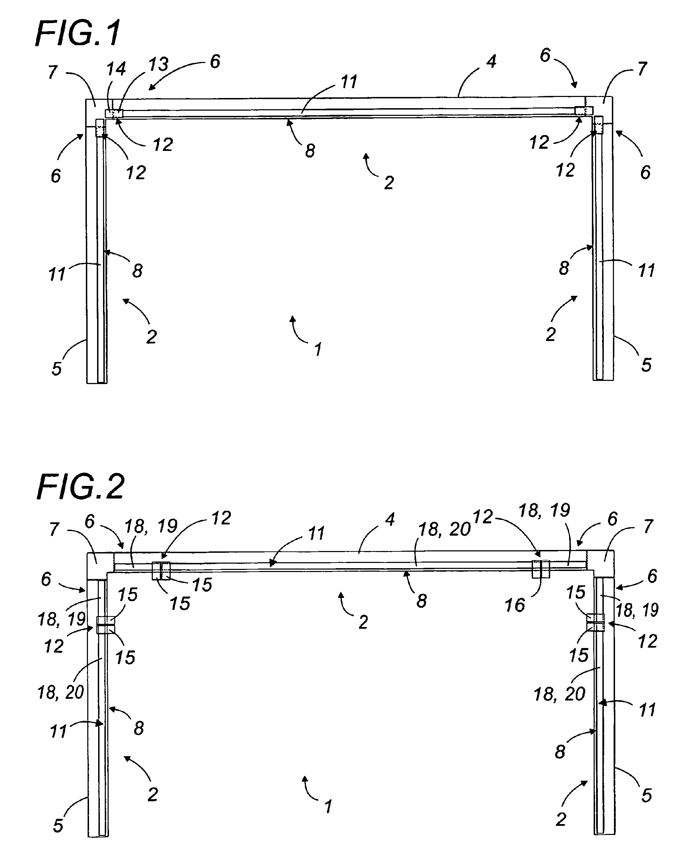

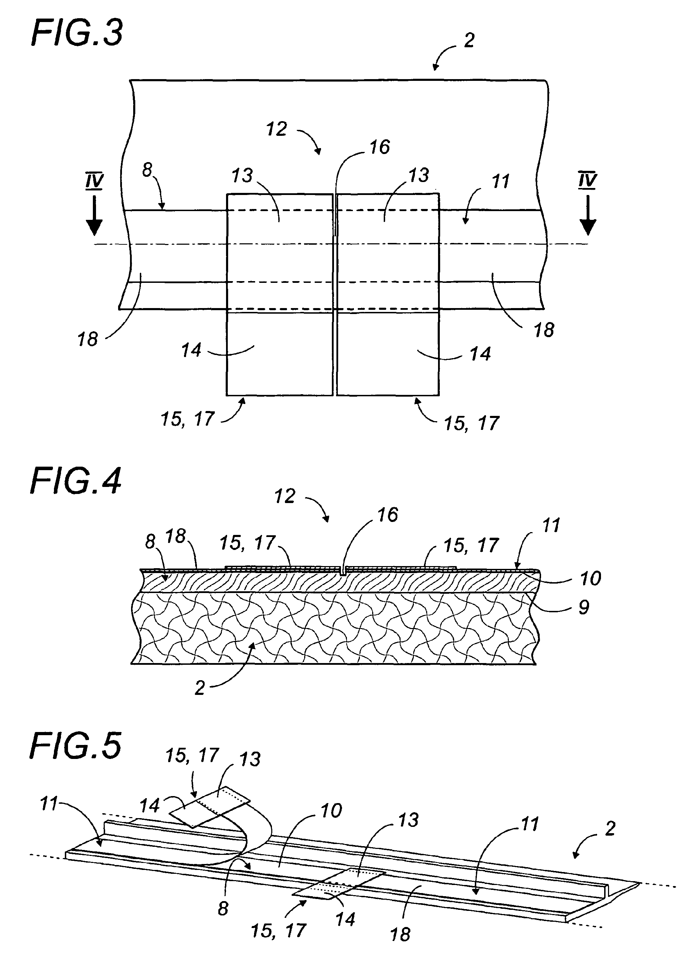

Le dispositif et le procédé selon la présente invention vont maintenant être décrits de façon détaillée en référence aux figures 1 à 7. Les éléments équivalents représentés sur les différentes figures porteront les mêmes références numériques.

Par convention dans cette demande, on désignera par face avant du profilé ou du cadre, la face du profilé ou du cadre destinée à être visible une fois le profilé ou le cadre mis en place et par face arrière du profilé ou du cadre, la face du profilé ou du cadre comportant la bande adhésive, c'est-à-dire la face destinée à être cachée une fois le profilé ou le cadre mis en place.

Sur les différentes figures, on a représenté un cadre 1, formant un joint d'habillage pour pare-brise et constituant un exemple d'application préférentiel de l'invention. Il doit cependant être bien compris que ces figures ainsi que la description détaillée de celles-ci ne sont en rien limitatives de la portée de l'invention définie par les revendications.

Le cadre d'habillage 1 représenté est constitué de plusieurs tronçons de profilé 2, également appelés brins, assemblés les uns aux autres, de manière à constituer un joint périmétrique destiné à ceinturer, par exemple, une vitre fixe 3.

Ce cadre d'habillage 1 peut ceinturer la vitre 3 sur la totalité de son périmètre ou sur une partie seulement de celui-ci. Dans le cas d'un pare-brise, il ne s'étend généralement pas sur la totalité de sa périphérie. Le bord inférieur de ce dernier reste en général libre, car caché par l'extrémité du capot.

Sur les figures 1 et 2, le cadre d'habillage 1 est sensiblement rectangulaire et comprend un tronçon de profilé ou brin sensiblement horizontal 4 et deux tronçons de profilé ou brins sensiblement verticaux 5, afin de pouvoir encadrer le pare-brise sur trois de ses côtés.

De manière évidente, le cadre selon l'invention peut, sans sortir de la portée de l'invention, être constitué d'un nombre différent de tronçons de profilé et/ou être conformé de manière différente de façon à s'adapter à la vitre, au panneau ou au rebord qu'il est destiné à équiper.

De façon classique, ces trois tronçons de profilé 2 sont solidarisés deux à deux au niveau de leurs extrémités 6 adjacentes, par un raccordement d'angle 7 réalisé sous la forme d'un surmoulage.

La solidarisation de ces tronçons 2 peut également être réalisée par un soudage de leurs extrémités 6 adjacentes après biseautage à 45° de celles-ci, ou par tout autre moyen approprié.

Afin de pouvoir être rapporté par collage en vue de son utilisation, le cadre 1 comporte une matière adhésive se présentant sous la forme d'une bande d'adhésif double face 8 qui s'étend sur la face arrière de chaque tronçon de profilé 2.

Chacune de ces bandes d'adhésif double face 8 comporte une face 9 rapportée sur et solidarisée à la face arrière du tronçon de profilé juste après l'extrusion de celui-ci, et une face libre 10 protégée par une pellicule de protection 11.

La pellicule 11 protège la face libre 10 de l'adhésif 8 jusqu'au moment où le cadre 1 doit être monté par collage en position d'utilisation.

Afin de faciliter le retrait ultérieur de la pellicule 11 pour la mise en place du cadre 1, chaque bande de pellicule de protection 11 comporte au moins une languette de préhension 12.

Cette languette 12 comprend une partie de rattachement 13 à la pellicule de protection, qui est rapportée sur et solidarisée à la pellicule par exemple par collage, soudage ou tout autre moyen approprié.

La languette 12 comprend également une extrémité libre 14 par laquelle l'utilisateur peut saisir la languette 12 et exercer une traction afin de décoller la pellicule de protection 11.

Selon l'art antérieur et comme représenté sur la figure 1, les languettes de préhension 12 sont classiquement disposées longitudinalement, à l'une au moins des extrémités de chaque bande d'adhésif double face et donc de chaque tronçon de profilé. Le cadre représenté sur la figure 1 comporte quatre languettes de préhension 12 disposées au niveau des extrémités 6, au voisinage des surmoulages d'angle 7.

Selon l'invention et comme représenté sur les figures 2 à 5, les languettes de préhension 12 sont déposées transversalement à la pellicule de protection 11, leur extrémité libre 14 dépassant latéralement de l'adhésif 8. Elles sont, de plus, disposées dans la longueur du profilé, en pleine zone adhésive.

Selon un mode de réalisation préférentiel, les languettes 12 selon l'invention sont placées à environ une dizaine de centimètres des surmoulages d'angle 7, c'est-à-dire à environ une dizaine de centimètres de l'extrémité de la bande adhésive 8.

Selon une caractéristique essentielle de l'invention, chaque languette de préhension 12 est une languette double, composée de deux fractions de languette 15 juxtaposées de part et d'autre d'une découpe 16 de la pellicule de protection 11. Les fractions de languettes 15 peuvent être quelconques. Cependant, elles sont de préférence sensiblement identiques et forment ainsi deux demi-languettes 17.

De manière préférentielle, les deux fractions de languettes 15 proviennent d'une unique languette mère 12, individualisée par sectionnement en deux parties en même temps que la pellicule de protection 11 lors de la réalisation de la découpe 16. Cependant, les deux fractions de languette 15 peuvent également être constituées de deux languettes unitaires juxtaposées, positionnées de part et d'autre de la découpe 16.

Selon l'invention, on dispose alors, pour chaque tronçon de profilé 2, d'au moins deux longueurs 18 de pellicule de protection 11 destinées à être arrachées, à l'extrémité desquelles se trouve une fraction de languette de préhension 15, de préférence une demi-languette de préhension 17.

Sur la variante préférentielle représentée, les fractions de languette 15 sont placées à une dizaine de centimètres environ des raccordements d'angle 7. Les longueurs de pellicule 18 sont donc de taille différente de part et d'autre de la découpe 16, une petite longueur 19 s'étendant près de l'extrémité 6 du profilé et une grande longueur 20 se trouvant de l'autre côté de la découpe.

Néanmoins, les longueurs 18 de pellicule peuvent évidemment être de tailles quelconques, identiques ou différentes.

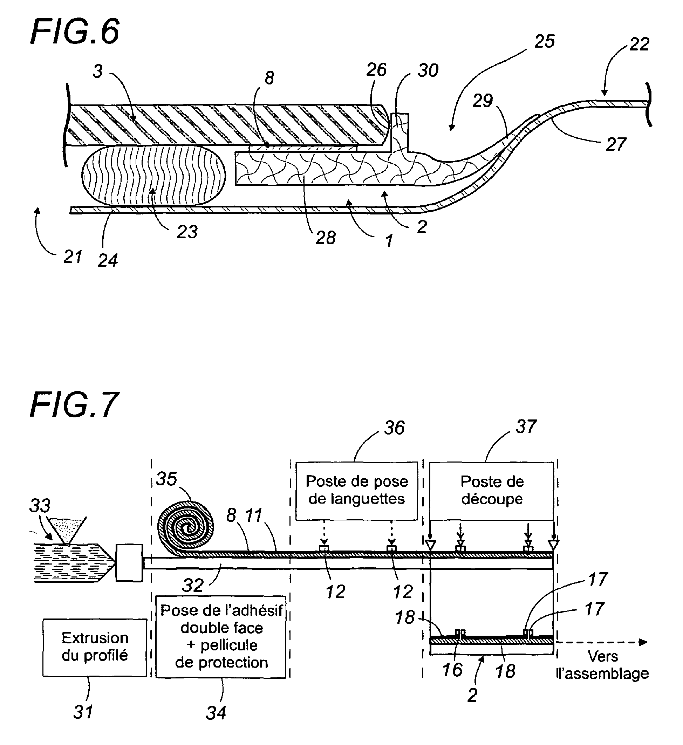

Sur la figure 6, on a représenté un exemple d'application du cadre 1 selon l'invention, en tant que cadre d'habillage périmétrique de pare-brise.

De façon classique, un pare-brise 3 est placé sur une ouverture 21 formée dans la carrosserie 22 du véhicule. Le pare-brise 3 est fixé par collage, au moyen d'un cordon de colle 23, sur un repli 24 de la tôle de la carrosserie 22 bordant l'ouverture à obturer.

Du fait des tolérances de fabrication, il existe un interstice 25 entre le chant 26 de la vitre et l'épaulement 27 amorçant le repli 24 de la carrosserie.

Afin de masquer cet interstice 25, visible et inesthétique, le pare-brise 3 est équipé d'un cadre d'habillage 1 selon l'invention qui le borde sur trois côtés au moyen de ses trois tronçons de profilé 2.

Comme on peut le voir sur la coupe de la figure 6, chaque tronçon de profilé 2 comporte une paroi longitudinale sensiblement horizontale 28 destinée à venir porter sur le bord du vitrage 3.

La paroi 28 se prolonge en direction de la carrosserie par une paroi souple longitudinale et sensiblement horizontale, constituant une lèvre souple de masquage 29 dont l'extrémité libre est prévue pour reposer sur la tôle de carrosserie 22 afin de masquer l'interstice inesthétique 25 existant entre le pare-brise et la carrosserie.

De la face arrière de la paroi longitudinale horizontale 28 s'étend une nervure longitudinale de butée 30, de préférence sensiblement verticale. Cette nervure 30 est destinée à venir en butée contre le chant 26 du vitrage 3, afin de positionner correctement le cadre 1 lors de sa mise en place.

Le cadre profilé 1 selon l'invention est solidarisé au vitrage 3 au moyen d'une bande d'adhésif double face 8, dont l'une des faces 10 adhère au vitrage 3 et dont l'autre face 9 adhère à la face arrière de la paroi longitudinale 28.

Il doit être bien compris que l'invention ne se limite pas aux cadres profilés enjoliveurs pour vitres fixes, mais concerne tout élément à rapporter comportant un adhésif double face sur lequel s'étend une pellicule de protection, qui doit être enlevée avant collage au moyen d'une languette de préhension constituée de deux fractions de languettes, positionnées de part et d'autre d'une découpe de la pellicule de protection.

De ce fait, le profilé peut présenter une forme différente de celle décrite ci-dessus et comporter des éléments en plus ou en moins par rapport à ceux précédemment décrits à titre d'exemple, les caractéristiques du profilé étant choisies de manière appropriée en fonction de l'application souhaitée.

La figure 7 illustre schématiquement un exemple préférentiel de ligne automatisée de fabrication de tronçons de profilé selon l'invention, qui met en εuvre le procédé selon l'invention de pose et confection de languettes de préhension.

Au cours d'une première étape 31, une longueur continue de profilé 32 est extrudée au moyen d'un appareillage classique d'extrusion 33, de manière à présenter des caractéristiques appropriées en fonction de son application finale.

Au cours d'une deuxième étape 34, une bande continue d'adhésif double face 8, revêtue sur sa face supérieure 10 d'une pellicule de protection 11, est appliquée sur la face arrière, autrement dit la face à rapporter, du profilé 32.

Pour ce faire, une bobine 35 d'adhésif double face revêtu d'une pellicule de protection est disposée après la sortie de la filière de l'extrudeuse 33. La bobine 35 est déroulée simultanément au défilement du profilé extrudé 32 et la bande issue de cette bobine vient se coller en continu sur la surface du profilé par une de ses faces adhésives.

La bonne mise en contact de la bande d'adhésif avec le profilé, ainsi que la réalisation d'un effort de pression suffisant pour permettre une adhérence satisfaisante de la bande sur le profilé sont réalisées par des moyens connus de l'homme du métier, non représentés et qui ne seront pas décrits dans cette demande.

L'étape 34 de pose de l'adhésif double face 8 et de sa pellicule de protection 11 peut évidemment être réalisée de toute autre façon imaginable. Par exemple, il est possible de poser d'abord l'adhésif double face 8, puis la pellicule de protection 11 dans un second temps, ceci pouvant être réalisé par exemple au moyen de deux bobines successives. Il est également envisageable de réaliser une coextrusion, simultanée à celle du profilé 32, de la matière adhésive 8 et/ou de la pellicule de protection 11.

Ensuite, le profilé 32 passe dans un poste de pose de languettes 36 dans lequel des languettes de préhension 12 sont rapportées transversalement au profilé 32 et solidarisées à la pellicule de protection 11, de préférence par collage ou soudage. La fréquence de pose des languettes entières 12 est synchronisée avec le défilement du profilé 32, c'est-à-dire avec la vitesse d'extrusion, de manière que l'intervalle existant entre deux languettes successives corresponde à un écartement prédéterminé en fonction des caractéristiques souhaitées pour le produit final.

Sur l'exemple de la figure 7, le poste de pose de languettes 36 a été représenté comme déposant simultanément deux languettes de préhension 12. Il peut évidemment n'en déposer qu'une seule à la fois ou en déposer un nombre quelconque, en fonction des caractéristiques souhaitées pour le tronçon de profilé à obtenir.

Le profilé 32 aboutit enfin à un poste de découpe 37, où la longueur continue de profilé 32 est débitée en tronçons de profilé 2 de longueur appropriée.

Simultanément, les languettes de préhension 12 sont individualisées automatiquement en deux fractions de languette 15 par un trait de coupe 16 qui sectionne en même temps la languette 12 et la pellicule de protection 11. La coupe est réalisée de préférence sensiblement au niveau du milieu de la languette 12. On dispose alors de deux demi-languettes 17, solidarisées chacune à l'extrémité d'une longueur de pellicule de protection 18 destinée à être arrachée.

Pour assurer une découpe de la totalité de l'épaisseur de la languette 12 et de la pellicule 11, la découpe 16 peut avantageusement se prolonger jusque dans l'épaisseur de l'adhésif 8. Néanmoins, l'épaisseur du profilé 32 doit être laissée intacte. Cependant, la bande d'adhésif double face 8 présente une épaisseur suffisante pour permettre à l'homme du métier de réaliser sans difficulté un tel réglage en tenant compte des tolérances de fabrication.

Les tronçons de profilés 2 obtenus peuvent ensuite être repris pour des étapes ultérieures d'assemblage et de mise en forme, telles que par exemple des étapes de surmoulage ou de soudage.

Sur la figure 7, on a représenté la découpe des languettes de préhension et de la pellicule de protection au niveau du poste de découpe 37, c'est-à-dire comme ayant lieu simultanément au sectionnement du profilé continu 32 en tronçons de profilé 2. On peut évidemment envisager que cette découpe ait lieu au sein d'un poste indépendant de découpe, placé entre le poste 36 de pose des languettes et le poste de découpe 37 ou placé après le poste de découpe 37.

Il est également possible d'imaginer que cette découpe soit réalisée avant le poste 36 de pose des languettes et ne concerne alors que la pellicule de protection 11. L'étape 36 consisterait alors à déposer deux languettes unitaires de part et d'autre du trait de coupe 16.

Le procédé automatisé de pose et de confection de languettes de préhension selon l'invention comprend alors les étapes suivantes :
- découpe de la pellicule de protection 11, en pleine zone adhésive, de façon à obtenir deux longueurs de pellicule de protection 18 destinées à être arrachées ;
- solidarisation à la pellicule de protection 11 de deux languettes de préhension 15, transversalement au profilé 32 de manière que leur extrémité libre 14 dépasse latéralement par rapport à l'adhésif 8, de part et d'autre de la découpe 16 de la pellicule de protection 11 et sensiblement à l'extrémité de chaque longueur 18 de pellicule de protection.

Dans tous les cas et selon une caractéristique de l'invention, cette étape de découpe a lieu avant les étapes ultérieures d'assemblage par surmoulage, soudage ou autre.

## Revendications

1. Pellicule de protection d'une bande adhésive double face susceptible d'être rapportée sur un profilé extrudé, comportant une ou plusieurs languettes de préhension (12) comprenant une partie de rattachement (13) à la pellicule de protection et une extrémité libre (14) et servant à faciliter l'arrachage de la pellicule de protection (11) avant collage, **caractérisée en ce qu'**au moins une des languettes de préhension (12) est solidarisée à la pellicule de protection (11), en pleine zone adhésive et transversalement à la pellicule de manière que son extrémité libre (14) dépasse latéralement par rapport à l'adhésif (8) et **en ce que** cette languette est une languette double, composée de deux fractions de languette (15) juxtaposées de part et d'autre d'une découpe (16) de la pellicule de protection (11) individualisant celle-ci en deux longueurs de pellicule de protection (18), chacune de ces fractions de languette (15) étant solidarisée sensiblement à l'extrémité de l'une de ces longueurs (18).

2. Pellicule de protection selon la revendication précédente **caractérisée en ce que** les fractions de languettes (15) sont sensiblement identiques et forment ainsi deux demi-languettes (17).

3. Pellicule de protection selon la revendication 1 ou la revendication 2 **caractérisée en ce que** les deux fractions de languettes (15) proviennent d'une unique languette mère (12), individualisée par sectionnement en deux parties en même temps que la pellicule de protection (11) lors de la réalisation de la découpe (16).

4. Pellicule de protection selon la revendication 1 ou 1a revendication 2 **caractérisée en ce que** les deux fractions de languettes (15) sont deux languettes unitaires juxtaposées, positionnées de part et d'autre de la découpe (16).

5. Pellicule de protection selon l'une quelconque des revendications précédentes **caractérisée en ce que** la languette de préhension (12) est solidarisée à la pellicule de protection par collage ou par soudage.

6. Pellicule de protection selon l'une quelconque des revendications précédentes **caractérisée en ce que** le couple de fractions de languette de préhension (15) se trouve disposé à environ une dizaine de centimètres de l'extrémité de la bande adhésive.

7. Profilé à coller sur une surface support par l'intermédiaire d'une bande adhésive (8) sur laquelle s'étend une pellicule de protection (11) devant être enlevée avant collage au moyen d'une languette de préhension (12), **caractérisé en ce qu'**il comporte une pellicule de protection (11) conforme à l'une quelconque des revendications précédentes.

8. Cadre à coller sur une surface support par l'intermédiaire d'une bande adhésive (8) sur laquelle s'étend une pellicule de protection (11) devant être enlevée avant collage au moyen d'une languette de préhension (12), **caractérisé en ce qu'**il est formé par assemblage de plusieurs tronçons de profilé (2), solidarisés deux à deux au niveau de leurs extrémités adjacentes (6) par un raccordement d'angle (7) réalisé sous la forme d'un surmoulage ou d'un soudage, l'un au moins de ces tronçons de profilé (2) étant un profilé selon la revendication 7.

9. Procédé automatisé de pose et de confection de languettes de préhension, servant à faciliter l'arrachage ultérieur d'une pellicule de protection (11) recouvrant la face libre (10) d'une bande d'adhésif double face (8) s'étendant sur un profilé (32) extrudé en continu, les languettes comportant une partie de rattachement (13) à la pellicule de protection et une extrémité libre (14), procédé **caractérisé en ce qu'**il comprend les étapes suivantes, réalisées en ligne d'extrusion et avant d'éventuelles étapes ultérieures d'assemblage de tronçons du profilé par surmoulage, soudage ou autre :
- solidarisation d'une languette de préhension (12) à la pellicule de protection (11), en pleine zone adhésive et transversalement au profilé (32) de manière que son extrémité libre (14) dépasse latéralement par rapport à l'adhésif (8) ;
- découpe de la languette (12) et de la pellicule de protection (11) de façon à individualiser au même endroit la languette de préhension et la pellicule de protection pour obtenir deux fractions de languette (15), solidarisées chacune à l'extrémité d'une longueur de pellicule de protection (18) destinée à être arrachée.

10. Procédé de pose et de confection de languettes de préhension selon la revendication précédente **caractérisé en ce que** l'étape de solidarisation est une étape de collage ou de soudage.

11. Procédé de pose et de confection de languettes de préhension selon la revendication 9 ou la revendication 10 **caractérisé en ce que** la découpe de la languette (12) et de la pellicule de protection (11) s'effectue sensiblement au niveau du milieu de la languette (12) de façon à obtenir deux demi-languettes (17).

12. Procédé de pose et de confection de languettes de préhension selon l'une quelconque des revendications 9 à 11 **caractérisé en ce que** pendant l'étape de découpe de la languette (12) et de la pellicule de protection (11), on réalise une découpe (16) qui se prolonge jusque dans l'épaisseur de l'adhésif (8).

13. Procédé de pose et de confection de languettes de préhension selon l'une quelconque des revendications 9 à 12 **caractérisé en ce que** l'étape de découpe de la languette (12) et de la pellicule de protection (11) se déroule simultanément au sectionnement du profilé continu (32) en tronçons de profilé (2).

14. Procédé automatisé de pose et de confection de languettes de préhension, servant à faciliter l'arrachage ultérieur d'une pellicule de protection (11) recouvrant la face libre (10) d'une bande d'adhésif double face (8) s'étendant sur un profilé (32) extrudé en continu, les languettes comportant une partie de rattachement (13) à la pellicule de protection et une extrémité libre (14), procédé **caractérisé en ce qu'**il comprend les étapes suivantes, réalisées en ligne d'extrusion et avant d'éventuelles étapes ultérieures d'assemblage du profilé par surmoulage, soudage ou autre :
- découpe de la pellicule de protection (11), en pleine zone adhésive, de façon à obtenir deux longueurs de pellicule de protection (18) destinées à être arrachées ;
- solidarisation à la pellicule de protection (11) de deux languettes de préhension (15), transversalement au profilé (32) de manière que leur extrémité libre (14) dépasse latéralement par rapport à l'adhésif (8), de part et d'autre de la découpe (16) de la pellicule de protection (11) et sensiblement à l'extrémité de chaque longueur (18) de pellicule de protection.

15. Profilé extrudé tel que résultant de l'une quelconque des revendications 9 à 14 comportant une bande adhésive double face.

## Claims

1. A film for protecting a strip of double-face adhesive that can be applied to an extruded section, comprising one or more pull tabs (12) comprising one portion (13) for attachment to the protective film (11) and one free extremity (14), and used to facilitate removal of the protective film (11) before gluing, **characterized in that** at least one of the pull tabs (12) is attached to the protective film (11) in the middle of the adhesive area and transversely relative to the film so that its free extremity (14) extends laterally beyond the adhesive (8), and **in that** this tab is a double tab, composed of two juxtaposed tab portions (15) on either side of a slit (16) in the protective film (11) individualizing the film into two lengths of protective film (18), each of said tab portions (15) being essentially integral with the extremity of one of these lengths (18).

2. A protective film according to the preceding claim **characterized in that** the pull tab portions (15) are essentially identical and therefore form two half-tabs (17).

3. A protective film according to claim 1 or claim 2 **characterized in that** the two pull tab portions (15) originate from a single mother tab (12), individualized by separating them into two parts at the same time a slit (16) is made in the protective film (11).

4. A protective film according to claim 1 or claim 2 **characterized in that** the two tab portions (15) are two unitary juxtaposed tabs positioned on either side of the slit (16).

5. A protective film according to any one of the preceding claims **characterized in that** the pull tab (12) is attached to the protective film by gluing or soldering.

6. A protective film according to any one of the preceding claims **characterized in that** the pair of pull tab portions (15) is located at approximately ten centimeters from the end of the adhesive strip.

7. A section to be glued to a supporting surface by means of an adhesive strip (8) covered by a protective film (11) that will be removed before gluing using a pull tab (12), **characterized in that** it comprises a protective film (11) in conformity with any one of the preceding claims.

8. A frame to be glued to a supporting surface using an adhesive strip (8) covered by a protective film (11) that must be removed before gluing using a pull tab (12), **characterized in that** it is formed by assembling several section portions (2), joined in pairs at their adjacent extremities (6) by an angle connection (7) formed by molding or soldering, at least one of these section portions (2) consisting of a section according to claim 7.

9. An automated method for positioning and forming pull tabs used to facilitate the subsequent removal of a protective film (11) covering the unattached surface (10) of a strip of double-face adhesive (8) extending along a continuously extruded section (32), said tabs comprising one portion (13) for attachment to the protective film and one free extremity (14), said method **characterized in that** it comprises the following steps performed on the extrusion line and before the later steps of assembling the section portions by molding, soldering, or the like:
. attaching a pull tab (12) to the protective film (11) in the middle of adhesive zone and transversely relative to the section (32) 50 that its unattached extremity (14) extends laterally beyond to the adhesive (8);
. cutting the tab (12) and the protective film (11) so as to individualize the pull tab and the protective film in the same location in order to obtain two tab portions (15), each joined to the extremity of a length of protective film (18) designed to be torn away.

10. A method for positioning and forming pull tabs according to the preceding claim **characterized in that** the attachment step is a gluing or soldering step.

11. A method for positioning and forming pull tabs according to claim 9 or claim 10 **characterized in that** cutting the tab (12) and the protective film (11) occurs essentially at the middle of the tab (12), resulting in two half-tabs (17).

12. A method for positioning and forming pull tabs according to any one of claims 9 through 11 **characterized in that** during the step of cutting the tab (12) and the protective film (11), a slit (16) is made that extends through the adhesive (8).

13. A method for positioning and forming pull tabs according to any one of claims 9 through 12 **characterized in that** the step of cutting the tab (12) and the protective film (11) occurs simultaneously with dividing the continuous section (32) into section portions (2).

14. An automated method for positioning and forming pull tabs used to facilitate the ultimate removal of a protective film (11) covering the free surface (10) of a strip of double-face adhesive (8) extending along a continuously extruded portion (32), said tabs comprising one portion (13) for attachment to the protective film and one free extremity (14), said method **characterized in that** it comprises the following steps occurring on the extrusion line and before the later steps of assembling the section by molding, soldering, or the like:
. cutting the protective film (11) in the middle of the adhesive zone, so as to obtain two lengths of protective film (18) designed to be torn off;
. attaching to the protective film (11) two pull tabs (15) transversely relative to the section (32) so that their free extremity (14) extends laterally beyond the adhesive (8) on either side of the slit (16) in the protective film (11) and essentially at the extremity of each length (18) of protective film.

15. An extruded section such as the sections resulting from anyone of claims 9 through 14 comprising a double-face adhesive strip.

## Patentansprüche

1. Schutzfolie eines doppelseitigen zum Anbringen auf ein Strangprofil geeigneten Klebebands, wobei die Schutzfolie eine oder mehrere Greiflaschen (12) aufweist, die einen Verbindungsbereich (13) mit der Schutzfolie sowie ein freies Ende (14) aufweisen und zum Erleichtern des Losreißens der Schutzfolie (11) vor dem Kleben dienen, **dadurch gekennzeichnet, dass** wenigstens eine der Greiflaschen (12) mit der Schutzfolie (11) inmitten des Klebebereichs und quer zur Folie derart verbunden ist, dass ihr freies Ende (14) bezüglich des Klebstoffs (8) seitlich vorragt, und dass diese Lasche eine doppelte Lasche ist, die aus zwei Bruchteilen (15) der Lasche gebildet ist, die auf beiden Seiten eines Schnitts (16) der Schutzfolie (11) nebeneinander angeordnet sind, der diese in zwei Längen (18) der Schutzfolie vereinzelt, wobei jeder der Bruchteile (15) der Lasche im Wesentlichen an dem Ende einer der Längen (18) der Schutzfolie befestigt ist.

2. Schutzfolie nach dem vorangehenden Anspruch, **dadurch gekennzeichnet, dass** die Bruchteile (15) der Lasche im Wesentlichen identisch sind und somit zwei Halblaschen (17) bilden.

3. Schutzfolie nach Anspruch 1 oder 2, **dadurch gekennzeichnet, dass** die beiden Bruchteile (15) der Lasche von einer einzigen Ursprungslasche (12) stammen, die bei der Durchführung des Schnitts (16) durch gleichzeitiges Trennen mit der Schutzfolie (11) in zwei Teile vereinzelt worden sind.

4. Schutzfolie nach Anspruch 1 oder 2, **dadurch gekennzeichnet, dass** die beiden Bruchteile (15) der Lasche von zwei einheitlichen nebeneinanderliegenden Laschen gebildet sind, die auf beiden Seiten des Schnitts (16) angeordnet sind.

5. Schutzfolie nach einem der vorangehenden Ansprüche, **dadurch gekennzeichnet, dass** die Greiflasche (12) mit der Schutzfolie durch Kleben oder Schweißen verbunden ist.

6. Schutzfolie nach einem der vorangehenden Ansprüche, **dadurch gekennzeichnet, dass** das Paar der Bruchteile (15) der Greiflaschen etwa 10 cm von dem Ende des Klebebands angeordnet ist.

7. Profil zum Kleben auf eine Trägerfläche mittels eines Klebebands (8), über das sich eine Schutzfolie (11) erstreckt, bevor diese vor dem Kleben mittels einer Greiflasche (12) entfernt worden ist, **dadurch gekennzeichnet, dass** es eine Schutzfolie (11) nach einem der vorangehenden Ansprüche aufweist.

8. Rahmen zum Kleben auf eine Trägerfläche mittels eines Klebebands (8), über das sich eine Schutzfolie (11) erstreckt, bevor diese vor dem Kleben mittels einer Greiflasche (12) entfernt worden ist, **dadurch gekennzeichnet, dass** er durch Zusammenfügen mehrerer Profilabschnitte (2) gebildet ist, die paarweise auf dem Niveau ihrer benachbarten Enden (6) durch eine Winkelverbindung (7) miteinander verbunden sind, die in Gestalt eines Abgusses oder durch Schweißen ausgebildet ist, wobei wenigstens einer der Profilabschnitte (2) von einem Profil nach Anspruch 7 gebildet ist.

9. Automatisiertes Verfahren zum Anordnen und Erzeugen von Greiflaschen, die zur Erleichterung des späteren Losreißens einer Schutzfolie (11) dienen, welche die freie Oberfläche (10) eines doppelseitigen Klebebandes (8) abdeckt, das sich kontinuierlich über ein Strangprofil (32) erstreckt, wobei die Laschen einen Verbindungsbereich (13) mit der Schutzfolie sowie ein freies Ende (14) aufweisen, wobei das Verfahren **dadurch gekennzeichnet ist, dass** es die folgenden Schritte umfasst, die in einer Extrusionslinie und vor gegebenenfalls vorgesehenen späteren Schritten des Zusammenfügens von Profilabschnitten durch Abguss, Schweißen oder dergleichen durchgeführt werden:
- Verbinden einer Greiflasche (12) mit der Schutzfolie (11), inmitten des Klebebereichs und quer zu dem Profil (32) derart, dass ihr freies Ende (14) bezüglich des Klebstoffs (8) seitlich vorragt;
- Schneiden der Lasche (12) und der Schutzfolie (11) derart, dass die Greiflasche und die Schutzfolie an derselben Stelle vereinzelt werden, um zwei Bruchteile (15) der Lasche zu erhalten, die jeweils mit dem Ende einer zum Losreißen vorgesehenen Länge (18) der Schutzfolie verbunden sind.

10. Verfahren zum Anordnen und Erzeugen von Greiflaschen nach dem vorangehenden Anspruch, **dadurch gekennzeichnet, dass** der Schritt des Verbindens ein Kleb- oder Schweißschritt ist.

11. Verfahren zum Anordnen und Erzeugen von Greiflaschen nach Anspruch 9 oder 10, **dadurch gekennzeichnet, dass** das Schneiden der Lasche (12) sowie der Schutzfolie (11) im Wesentlichen auf dem Niveau des Mittenbereichs der Lasche (12) erfolgt, so dass zwei Halblaschen (17) erhalten werden.

12. Verfahren zum Anordnen und Erzeugen von Greiflaschen nach einem der Ansprüche 9 bis 11, **dadurch gekennzeichnet, dass** während des Schritts des Schneidens der Lasche (12) sowie der Schutzfolie (11) ein Schnitt (16) durchgeführt wird, der sich bis in die Dicke des Klebstoffs (8) erstreckt.

13. Verfahren zum Anordnen und Erzeugen von Greiflaschen nach einem der Ansprüche 9 bis 12, **dadurch gekennzeichnet, dass** der Schritt des Schneidens der Lasche (12) sowie der Schutzfolie (11) zugleich mit dem Abtrennen des kontinuierlichen Profils (32) in Profilabschnitte (2) erfolgt.

14. Automatisiertes Verfahren zum Anordnen und Erzeugen von Greiflaschen, die zur Erleichterung des späteren Losreißens einer Schutzfolie (11) dienen, welche die freie Oberfläche (10) eines doppelseitigen Klebebandes (8) abdeckt, das sich kontinuierlich über ein Strangprofil (32) erstreckt, wobei die Laschen einen Verbindungsbereich (13) mit der Schutzfolie sowie ein freies Ende (14) aufweisen, wobei das Verfahren **dadurch gekennzeichnet ist, dass** es die folgenden Schritte umfasst, die in einer Extrusionslinie und vor gegebenenfalls vorgesehenen späteren Schritten des Zusammenfügens von Profilabschnitten durch Abguss, Schweißen oder dergleichen durchgeführt werden:
- Schneiden der Schutzfolie (11) inmitten des Klebebereich derart, dass zwei zum Losreißen vorgesehene Längen (18) der Schutzfolie erhalten werden;
- Verbinden der Schutzfolie (11) mit zwei Greiflaschen (15) quer zu dem Profil (32) derart, dass ihr jeweils freies Ende (14) bezüglich des Klebstoffs (8) auf beiden Seiten des Schnitts (16) der Schutzfolie (11) und im Wesentlichen am Ende jeder Länge (18) der Schutzfolie vorragt.

15. Strangprofil, welches aus einem Verfahren gemäß einem der Ansprüche 9 bis 14 hervorgeht, mit einem doppelseitigen Klebeband.
